# EUROPÄISCHE PATENTANMELDUNG

(11) **EP 2 664 681 A1**
(43) Veröffentlichungstag der Anmeldung: **20.11.2013**
(21) Anmeldenummer: 12168157.1
(22) Anmeldetag: 16.05.2012
(51) Int. Cl.: C21B 7/00, C21B 7/22, C21B 13/00, F27B 15/14, F27B 15/18, F27D 1/18, F27D 3/18, C21B 13/14, C21B 13/02

(54) **Verfahren und Vorrichtung zum Einbringen von feinteilchenförmigem Material in die Wirbelschicht eines Reduktionsaggregates**

(71) Anmelder: Siemens VAI Metals Technologies GmbH, 4031 Linz (AT)
(72) Erfinder: Millner, Robert, 3382 Loosdorf (AT); Plaul, Jan-Friedemann, Dr., 4020 Linz (AT); Hauzenberger, Franz, 4030 Linz (AT); Rein, Norbert, 1060 Wien (AT)
(74) Vertreter: Maier, Daniel Oliver

(57) **Zusammenfassung**

Die Erfindung betrifft ein Verfahren und eine Vorrichtung zum Einbringen von eisenhältige Partikel umfassendem feinteilchenförmigem Material (4) in ein Reduktionsaggregat (1), wobei das Reduktionsaggregat (1) ein Reduktionsaggregat (1) mit Wirbelschichtverfahren, insbesondere ein Wirbelschichtreduktionsaggregat, ist und das Einbringen des feinteilchenförmigen Materials (4) mittels eines Brenners (2) direkt in die Wirbelschicht (24) und/oder in einen Freiraum (25) über der Wirbelschicht (24) des Reduktionsaggregates (1) erfolgt.

Weiter betrifft die Erfindung die Verwendung des erfindungsgemäßen Verfahrens zur Herstellung von flüssigem Roheisen (17) oder flüssigen Stahlvorprodukten (18) mittels eines Schmelzreduktionsprozesses in einem Schmelzreduktionsaggregat (22) und/oder die Verwendung des erfindungsgemäßen Verfahrens zur Herstellung von Eisenprodukten (60) mittels eines Direktreduktionsprozesses in einer Direktreduktionsanlage.

## Beschreibung

### Technisches Gebiet

Die Erfindung betrifft ein Verfahren und eine Vorrichtung zum Einbringen von eisenhältige Partikel umfassendem feinteilchenförmigem Material in ein Reduktionsaggregat mittels eines Brenners, wobei gegebenenfalls eine Teilmenge des feinteilchenförmigen Materials aus Entstaubungsvorrichtungen stammt.

### Stand der Technik

In einem Roheisenherstellungsprozess fallen unterschiedliche Prozessgase, beispielsweise Offgas aus einem Wirbelschichtreduktionsaggregat oder aus einem Reduktionsaggregat mit Festbett an, welche vor einer weiteren Nutzung oder vor deren Freisetzung in die Umwelt von mitbeförderten Feststoffpartikeln weitgehend befreit werden müssen. Dies erfolgt in Entstaubungseinrichtungen, insbesondere in Trockenentstaubungseinrichtungen, wobei die bei der Entstaubung abgeschiedenen Feststoffpartikel oftmals Eisen- oder Eisenverbindungen enthalten, welche aus Wirtschaftlichkeitsgründen und Umweltschutzgründen dem Roheisenherstellungsprozess wieder zugeführt werden.

Beispielsweise fällt im Zuge der Roheisenherstellung mittels FINEX^{®} - Verfahren bei der Trockenentstaubung des FINEX^{®} - Offgases mittels Schlauchfilter beziehungsweise Heißgasfilter stündlich eine Staubmasse an, welche rund 2% der Masse des stündlichen Feinerzeinsatzes entspricht. Der Anteil des in dieser anfallenden Staubmasse enthaltenen Eisens und/oder der in dieser anfallenden Staubmasse enthaltenen Eisenverbindungen beträgt etwa 65%. Der Anteil des in dieser anfallenden Staubmasse enthaltenen Kohlenstoffs und/oder der in dieser anfallenden Staubmasse enthaltenen Kohlenstoffverbindungen beträgt etwa 6%.

Die unmittelbare Rückführung dieser teils vorreduzierten Feststoffpartikel in ein Reduktionsaggregat, insbesondere in ein Wirbelschichtreduktionsaggregat, bei der die Feststoffpartikel ohne einer vorhergehenden Agglomerierung zu Agglomeraten in das Reduktionsaggregat rückgeführt werden, ist insofern problematisch, als die Korngröße der Feststoffpartikel zu gering ist - eine typische Korngrößenverteilung D₅₀ solcher Feststoffpartikel liegt zwischen 6µm und 9µm -, was einen sofortigen Austrag der eingebrachten Feststoffpartikel aus dem Reduktionsaggregat zur Folge hätte. Aus diesem Grund werden die Feststoffpartikel vor dem Einbringen in das Reduktionsaggregat üblicherweise zu größeren Einheiten verdichtet, insbesondere agglomeriert. Dies hat den Nachteil, dass Agglomeriervorrichtungen, Aushärtevorrichtungen und teure Zusatzstoffe, Binder und gegebenenfalls eine große Menge an Wasser vorhanden sein müssen.

Die DE 1154817 beschreibt ein Verfahren zum Reduzieren von Eisenerz unter Einführung von feinzerkleinertem Eisenerz, Flussmittel, Brennstoff, Sauerstoff und/oder Luft durch Brenner in eine Reaktionskammer, wobei die Reaktionskammer als Schmelzofen ausgebildet ist. Dabei wird das feinzerkleinerte Eisenerz direkt mittels eines im Dombereich der Reaktionskammer angebrachten und mit seiner Achse senkrecht zur Oberfläche eines in der Reaktionskammer vorhandenen Schmelzbades aus flüssigem Eisen und flüssiger Schlacke auf diese Oberfläche geleitet.

Ähnlich wie die DE 1154817 offenbart die US 2688478 einen Reduktions- beziehungsweise Schmelzofen zur Reduktion und zum Einschmelzen von Eisenerz sowie zur Produktion von Gas und Energie. Dabei wird mittels an der Unterseite des Schmelzofens und knapp über dem Schmelzbad und mit ihren Längsachsen in Richtung Schmelzbadoberfläche angebrachten und in den Schmelzofen ragenden Einlässen Feinerz und gegebenenfalls Zusatzstoffe mit Hilfe eines sauerstoffhältigen Gases in den Schmelzofen eingeblasen, wobei das eingeblasene Material direkt auf die Schmelzbadoberfläche geblasen und an dieser eingeschmolzen wird.

Ebenso wie die US 2688478 offenbart die GB 882909 einen Schmelzofen und ein Verfahren zum Einschmelzen von Eisenerz, wobei mittels einer an der Oberseite des Schmelzofens angebrachten Brennervorrichtung Feinerz unter Zugabe von Sauerstoff und eines Brennstoffes in den Schmelzofen eingebracht werden und die Verbrennungsprodukte direkt auf die Oberfläche des im Schmelzofen vorhandenen Schmelzbades oder Schlackenbades auftreffen und eingeschmolzen werden.

Die WO 9815661 zeigt ein Verfahren und eine Vorrichtung zur Herstellung von flüssigem Roheisen, bei dem feinteilchenförmige Eisenoxidträger mittels eines Staubbrenners in die Einschmelzvergasungszone eines Einschmelzvergasers eingebracht werden. Dabei werden die feinteilchenförmigen Eisenoxidträger vor dem Einbringen in den Einschmelzvergaser mittels von der Vorrichtung zugeordneten Einrichtungen zur Reduktion der Eisenoxidträger reduziert.

Nachteilig dabei ist der erforderliche zusätzliche apparative Aufwand für die Einrichtungen zur Reduktion der Eisenoxidträger.

In der WO 02088401 ist ein Verfahren zur Herstellung von Roheisen im Rahmen eines COREX^{®} - Verfahrens dargestellt, wobei das von einem Einschmelzvergaser abgezogene Exportgas von Staub befreit wird, und der Staub mittels eines Staubbrenners zusammen mit einem sauerstoffhältigen Gas und kohlenstoffhältigen Material wieder in den Einschmelzvergaser eingebracht wird.

Die W09802586 offenbart ein Verfahren und eine Vorrichtung zur Herstellung von flüssigem Roheisen, wobei mittels im Dombereich beziehungsweise auf Höhe des Fließbettes eines Einschmelzvergasers angebrachter Brenner feinkörniges und reduziertes Eisenerz oder Staub in den Einschmelzvergaser eingebracht werden.

WO 9748825 beschreibt eine Vorrichtung zur Herstellung einer Metallschmelze mittels eines Einschmelzvergasers, bei der teilreduzierte und einen Feinanteil aufweisende Metallträger in den Einschmelzvergaser eingebracht werden, wobei diese zunächst auf eine mittels eines Brenners beheizbare Auffangvorrichtung, welche zentral im Dombereich des Einschmelzvergasers angeordnet ist, auftreffen, auf dieser teilweise aufgeschmolzen und anschließend durch Gravitationswirkung in die Einschmelzvergasungszone des Einschmelzvergasers gelangen.

Bei den oben genannten, aus dem Stand der Technik bekannten Verfahren, wird das feinteilchenförmige Material in ein Schmelzreduktionsaggregat eingebracht. Ein wesentlicher Nachteil all dieser Verfahren liegt darin, dass die Rückführung des feinteilchenförmigen Materials in den Roheisenherstellungsprozess durch Einbringen des feinteilchenförmigen Materials in das Schmelzreduktionsaggregat erfolgt. Das feinteilchenförmige Material muss im Schmelzreduktionsaggregat noch reduziert beziehungsweise fertigreduziert werden. Dadurch wird aber der Einschmelz- beziehungsweise der Vergasungsprozess in der Einschmelzvergasungszone des Schmelzreduktionsaggregates nachteilig beeinträchtigt. Daher ist die Rückführung von solchem feinteilchenförmigen Material in den Roheisenherstellungsprozess durch Einbringen des feinteilchenförmigen Materials in das Schmelzreduktionsaggregat mengenmäßig begrenzt. Es kann also in den aus dem Stand der Technik bekannten Verfahren keine beliebig große Menge an solchem feinteilchenförmigen Material in den Roheisenherstellungsprozess rückgeführt beziehungsweise eingesetzt werden.

### Zusammenfassung der Erfindung

### Technische Aufgabe

Aufgabe der vorliegenden Erfindung ist die Bereitstellung eines Verfahrens und einer Vorrichtung, bei dem eine große Menge an eisenhältige Partikel umfassendem feinteilchenförmigem Material einfach und ohne vorherige Behandlung unmittelbar in einem Roheisenherstellungsprozess und/oder Direktreduktionsprozess eingesetzt werden kann.

### Technische Lösung

Diese Aufgabe wird erfindungsgemäß durch ein Verfahren zum Einbringen von eisenhältige Partikel umfassendem feinteilchenförmigem Material in ein Reduktionsaggregat gelöst, bei dem das Reduktionsaggregat ein Reduktionsaggregat mit Wirbelschicht, insbesondere ein Wirbelschichtreduktionsaggregat, ist, und das Einbringen des feinteilchenförmigen Materials mittels eines Brenners direkt in die Wirbelschicht und/oder in einen Freiraum über der Wirbelschicht des Reduktionsaggregates erfolgt.

Das feinteilchenförmige Material weist eine Korngrößenverteilung D₅₀ auf, bei dem ein Einbringen, beispielsweise Einblasen, des feinteilchenförmigen Materials in die Wirbelschicht eines Wirbelschichtreduktionsaggregat mit großen Schwierigkeiten, insbesondere durch den Austrag des eingebrachten Materials mit einem das Wirbelschichtreduktionsaggregat im Gegenstrom durchsetzenden Reduktionsgas aus dem Wirbelschichtreduktionsaggregat, verbunden ist. Das feinteilchenförmige Material weist vorzugsweise eine Korngrößenverteilung D₅₀ von kleiner als 50µm auf. Vorzugsweise liegt die Korngrößenverteilung D₅₀ des feinteilchenförmigen Materials zwischen 2µm und 10µm. Mit Korngrößenverteilung oder Partikelgrößenverteilung D₅₀ wird der Median der Durchmesser aller in dem feinteilchenförmigen Material enthaltenen Partikel bezeichnet. Beispielsweise bedeutet D₅₀ = 5µm, dass die eine Hälfte der Partikel des feinteilchenförmigen Materials einen Durchmesser von weniger als 5µm und die andere Hälfte der Partikel des feinteilchenförmigen Materials einen Durchmesser von mehr als 5µm aufweist. Erfindungsgemäß umfasst das feinteilchenförmige Material eisenhältige Partikel. Umfassen ist in dem Sinn zu verstehen, dass das feinteilchenförmige Material jedenfalls eisenhältige Partikel enthält, jedoch zusätzliche andere Stoffe enthalten kann. Die eisenhältigen Partikel des feinteilchenförmigen Materials können aus dem Element Eisen bestehen oder die Partikel bestehen aus Eisen enthaltenden Verbindungen, beispielsweise Eisenoxide, Eisenerze oder Feineisenerze. Weiters umfasst der Begriff "eisenhältige Partikel" auch eine Mischung aus Partikeln die aus Eisen bestehen und Partikel die aus Eisen enthaltenden Verbindungen bestehen.

Das feinteilchenförmige Material wird erfindungsgemäß in ein Reduktionsaggregat mit Wirbelschichtverfahren, insbesondere in ein Wirbelschichtreduktionsaggregat, eingebracht. Die in das Reduktionsaggregat eingebrachten eisenhältigen Partikel werden, sofern diese Partikel oxidische Anteile enthalten, mittels eines vorzugsweise Wasserstoff und/oder Kohlenmonoxid umfassenden Reduktionsgases zu Eisenvorprodukten und/oder Eisenprodukten reduziert oder teilweise reduziert. Teilweise reduziert bedeutet, dass zumindest einige Partikel mit oxidischen Anteilen nach ihrer Reduktion zumindest ein Sauerstoffatom weniger enthalten.

Das Einbringen des feinteilchenförmigen Materials mittels des Brenners in das Reduktionsaggregat erfolgt derart, dass das feinteilchenförmige Material mittels des Brenners in die Wirbelschicht und/oder in den Freiraum über der Wirbelschicht des Reduktionsaggregates eingebracht wird. Das feinteilchenförmige Material kann gegebenenfalls auch mittels mehrerer, über den Mantel des Reduktionsaggregates verteilte Brenner, in das Reduktionsaggregat eingebracht werden, wobei das feinteilchenförmige Material mittels einer vom Brenner ausgehenden Flamme in das Reduktionsaggregat befördert beziehungsweise geblasen wird und/oder das feinteilchenförmige Material während des Einbringens in das Reduktionsaggregat mittels des Brenners zumindest mit einem Teil der vom Brenner ausgehenden Flamme in Berührung kommt oder mit dieser in Wechselwirkung tritt. Bei Vorhandensein mehrerer Brenner erfolgt die Aufteilung der jeweils mittels eines bestimmten Brenners eingebrachten Menge an feinteilchenförmigem Material beliebig und kann gezielt und jederzeit den jeweiligen Prozessanforderungen im Reduktionsaggregat angepasst werden.

Im Rahmen der vorliegenden Erfindung ist unter Reduktionsaggregat ein Reduktionsaggregat mit Wirbelschicht zu verstehen. Unter Wirbelschicht versteht man eine Schüttung von feinteilchenförmigem Material, welche durch eine aufwärtsgerichtete Strömung eines Fluids, vorzugsweise durch eine aufwärtsgerichtete Strömung des Reduktionsgases, in einen fluidisierten Zustand versetzt wird. Die Schüttung hat fluidähnliche Eigenschaften, beispielsweise die Eigenschaften von Wasser. Dabei wird zwischen homogenen Wirbelschichten mit einer räumlich gleichmäßigen Verteilung des im Wirbelschichtaggregat vorhandenen feinteilchenförmigen Materials und inhomogenen Wirbelschichten mit einer räumlich ungleichmäßigen Verteilung des im Wirbelschichtreduktionsaggregat vorhandenen feinteilchenförmigen Materials unterschieden. Zusätzlich sind stationäre oder blasenbildende Wirbelschichten, bei denen die Schüttung eine deutliche Grenze besitzt, aus der nur sehr wenig feinteilchenförmiges Material ausgetragen wird, bekannt. Als zirkulierende Wirbelschichten werden Wirbelschichten bezeichnet, bei denen die Schüttung keine deutliche obere Grenze mehr besitzt, das heißt, das feinteilchenförmige Material wird in große Maß aus der Wirbelschicht (Schüttung) ausgetragen. Blasenbildende Wirbelschichten weisen einen Volumsanteil von etwa 20% - 40% an feinteilchenförmigem Material auf. Oberhalb der sogenannten "dichten" Zone der Wirbelschicht, das ist jene Zone im Wirbelschichtreduktionsaggregat mit einem Volumsanteil des feinteilchenförmigen Materials über 5%, befindet sich der Freiraum über der Wirbelschicht mit einem Volumsanteil an feinteilchenförmigem Material von weniger als 5%. Erfindungsgemäß wird das feinteilchenförmige Material direkt in die Wirbelschicht und/oder in den Freiraum über der Wirbelschicht des Reduktionsaggregates eingebracht.

In Zusammenhang mit einem Anlagenverbund, bei dem mehrere Reduktionsaggregate mit Wirbelschichtverfahren in Kaskade geschaltet sind können die Mengen des eingebrachten feinteilchenförmigen Materials beliebig auf die unterschiedlichen Reduktionsaggregate aufgeteilt werden.

Dadurch ergibt sich der Vorteil, dass im Rahmen eines Roheisenherstellungsprozesses und/oder Direktreduktionsprozesses große Mengen dieses feinteilchenförmigen Materials direkt und ohne vorherige Behandlung wie beispielsweise Agglomerierung zu Agglomeraten, in das Reduktionsaggregat oder in die Reduktionsaggregate eingebracht werden können. Insbesondere ist dieses Verfahren dazu geeignet, sehr große Mengen an nicht und/oder nicht fertigreduziertem feinteilchenförmigen Material in den Roheisenherstellungsprozess rückzuführen, ohne dabei die Qualität des Roheisenherstellungsprozesses negativ, wie im Stand der Technik, zu beeinflussen. Im Stand der Technik wird das feinteilchenförmige Material üblicherweise in ein Schmelzreduktionsaggregat eingebracht. Dadurch wird aber der Einschmelz- beziehungsweise der Vergasungsprozess in der Einschmelzvergasungszone des Schmelzreduktionsaggregates nachteilig beeinträchtigt.

Eine Ausführungsform der Erfindung ist dadurch gekennzeichnet, dass zumindest eine Teilmenge des feinteilchenförmigen Materials aus einer Entstaubungsvorrichtung, insbesondere einer Trockentstaubungsvorrichtung, eines Schmelzreduktionsaggregates und/oder einer Direktreduktionsanlage stammt.

Unter Direktreduktionsanlage ist ein, zumindest ein Reduktionsaggregat umfassendes System zu verstehen, welches geeignet ist, eisenoxidhältiges Material zu reduzieren. Unter Schmelzreduktionsaggregat ist Aggregat beziehungsweise ein System zu verstehen, welches derart ausgebildet ist, dass es eisenoxidhältiges Material reduzieren und aufschmelzen kann - beispielsweise ein Hochofen oder eine FINEX^{®} - Anlage.

Durch diese Ausführungsform kann mittels Entstaubungsvorrichtungen abgeschiedenes feinteilchenförmiges Material wieder in den Roheisenherstellungsprozess rückgeführt werden. Der Begriff Entstaubungsvorrichtung umfasst insbesondere Trockenentstaubungsvorrichtungen zur Reinigung von aus dem Reduktionsaggregat abgezogenem Offgas und/oder von Ventgas aus einer Kompaktiervorrichtung, beispielsweise für HCI (hot compacted iron) und/oder Gießhallenentstaubungen. Handelt es sich um Nassentstaubungsvorrichtungen beziehungsweise Wäscher, so ist eine Rückführung der bei der Nassentstaubung abgeschiedenen Schlämme und Stäube, gegebenenfalls nach einer Trocknung der abgeschiedenen Schlämme und Stäube, als feinteilchenförmiges Material in das Reduktionsaggregat möglich.

Eine weitere Ausführungsform der Erfindung ist dadurch gekennzeichnet, dass zumindest bei einer Teilmenge des die eisenhältigen Partikel umfassenden feinteilchenförmigen Materials während des Einbringens mittels des Brenners zumindest eine Reaktion aus der Gruppe bestehend aus den Reaktionen
a. Oxidation der eisenhältigen Partikel,
b. Reduktion der eisenhältigen Partikel,
c. Vergrößerung der Porosität der eisenhältigen Partikel,
d. Trocknung des feinteilchenförmigen Materials,
e. zumindest teilweises Aufschmelzen des feinteilchenförmigen Materials, wobei das zumindest teilweise aufgeschmolzene feinteilchenförmige Material agglomeriert und in Form von Agglomeraten eingebracht wird, abläuft.

Mittels der vom Brenner ausgehenden Flamme, beziehungsweise mittels der von der Flamme auf die eisenhältigen Partikel übertragenen Wärmeenergie und/oder einer im Bereich der Flamme vorliegenden Gaszusammensetzung, welche sich von der außerhalb des Bereiches der Flamme vorliegenden Gaszusammensetzung unterscheidet, wird zumindest eine der oben genannten Reaktionen ausgelöst.

Weisen die eisenhältigen Partikel beispielsweise magnetitischen Anteile auf, so werden bei Vorliegen einer für Magnetit oxidierenden Gaszusammensetzung im Bereich der Flamme die magnetitischen Anteile zumindest teilweise zu hämatitischen Anteilen oxidiert. Zumeist sind im Reduktionsaggregat die hämatitischen Anteile besser als die magnetitischen Anteile reduzierbar.

Enthalten die in das Reduktionsaggregat einzubringenden eisenhältigen Partikel beziehungsweise das feinteilchenförmige Material eine für die Reduktion im Reduktionsaggregat ungünstig hohe Feuchtigkeit, so wird diese während des Einbringens reduziert. Das heißt, während des Einbringens der eisenhältigen Partikel beziehungsweise des feinteilchenförmigen Materials erfolgt eine Trocknung des feinteilchenförmigen Materials.

Ein weiterer Vorteil ist dadurch gegeben, dass während des Einbringens der eisenhältigen Partikel die Porosität der eisenhältigen Partikel vergrößert wird - dies führt zu einer Beschleunigung des Reduktionsvorganges im Reduktionsaggregat.

Das Einbringen des feinteilchenförmigen Materials in Form von Agglomeraten in die Wirbelschicht des Reduktionsaggregates hat ein Ansteigen der Korngrößenverteilung (beispielsweise der D₅₀) des eingebrachten feinteilchenförmigen Materials zur Folge, womit unmittelbar eine Verringerung des mit dem Reduktionsgas ausgetragenen Anteils an feinteilchenförmigem Material beziehungsweise des Anteils der eisenhältigen Partikel - die Wertstoffe - aus dem Reduktionsaggregat verbunden ist. Dadurch können die im Rahmen eines Roheisenherstellungsprozesses, beispielsweise ein FINEX^{®} - Prozess, durch den Austrag von Wertstoffen aus dem Reduktionsaggregat verursachten Verluste an Wertstoffen, insbesondere die eisenhältigen Partikel, minimiert werden. Zusätzlich wird die Stabilität und die Leistung, welche der Masse an kompaktierten Einheiten pro Zeiteinheit entspricht, einer dem Reduktionsaggregat gegebenenfalls nachgeschalten Kompaktiervorrichtung zur Kompaktierung der im Reduktionsaggregat hergestellten Eisenvorprodukte und/oder Eisenprodukte erhöht. Zusätzlich wird eine ohne die Anwendung des erfindungsgemäßen Verfahrens sonst notwendige Agglomerationsvorrichtung zur Agglomerierung der eisenhältigen Partikel vor dem Einbringen in das Reduktionsaggregat überflüssig.

Eine weitere Ausführungsform der Erfindung ist dadurch gekennzeichnet, dass das feinteilchenförmige Material mittels eines Fördergases pneumatisch zum Brenner transportiert wird.

Das feinteilchenförmige Material wird mit dem Fördergas mitbewegt beziehungsweise von diesem angetrieben oder mittels des Fördergases zu dem Brenner geblasen. Der Vorteil, der sich durch den pneumatischen Transport des feinteilchenförmigen Materials ergibt, ist der, dass das feinteilchenförmige Material tragende Vorrichtungen, beispielsweise Förderbänder, unnötig und lediglich das feinteilchenförmige Material zumindest teilweise umschließende Vorrichtungen, beispielsweise Rohrleitungen, notwendig sind. Dadurch wird ein während des Transportes gegebenenfalls auftretender Verlust von feinteilchenförmigem Material minimiert beziehungsweise verhindert.

Besonders bevorzugt ist das Verfahren, wenn die eisenhältigen Partikel zumindest ein Mitglied aus der Gruppe bestehend aus den Mitgliedern Magnetitpartikel, Staub aus einer Entstaubungsvorrichtung, insbesondere einer Trockenentstaubungsvorrichtung, Offgasstaub aus einer Trockenentstaubungsvorrichtung, Staub aus einer Kompaktiervorrichtung, insbesondere aus einer Heißkompaktiervorrichtung (hot compacted iron plant), aus einer Brikettiervorrichtung oder aus einer Heißbriketttiervorrichtung und Hüttenwerkstäube, insbesondere Stäube aus einer Gießhallenentstaubung, Feineisenerze - vorzugsweise Feineisenerze < 200µm,
umfassen.

Hieraus ergibt sich der Vorteil, dass ein Großteil der in Trockenentstaubungsvorrichtungen oder im Rahmen des Roheisenherstellungsprozesses anfallenden eisenhältigen Partikel wieder in den Roheisenherstellungsprozess rückgeführt werden können. Die Feineisenerze bestehen aus Feineisenerzpartikel. Ein Anteil von 90% - 95% der Feineisenerzpartikel weist einen Durchmesser von kleiner als 200µm auf.

Eine Variante des erfindungsgemäßen Verfahrens ergibt sich dadurch, dass das feinteilchenförmige Material kohlenstoffhältige Stoffe umfasst und/oder mit einer Temperatur von vorzugsweise mehr als 150°C zum Brenner transportiert wird.

Die kohlenstoffhältigen Stoffe werden, bei Vorhandensein von Sauerstoff in der Umgebung der kohlenstoffhältigen Stoffe, während des Einbringens des feinteilchenförmigen Materials in das Reduktionsaggregat mittels einer durch den Brenner erzeugten und von diesem ausgehenden Flamme teilweise oder auch vollständig oxidiert. Bei der Oxidation des feinteilchenförmigen Materials entsteht Kohlenmonoxid und Kohlendioxid. Kohlenmonoxid ist ein Gas mit Reduktionspotential und liefert daher einen Beitrag zur Reduktion von sich im Reduktionsaggregat befindenden eisenoxidhältigen Stoffen.

Dadurch ergibt sich der Vorteil, dass dem Reduktionsaggregat weniger oder gar kein Reduktionsgas, welches aus einer anderen Quelle, beispielsweise aus einem Schmelzreduktionsaggregat stammt, zugeführt werden muss.

Beträgt die Temperatur des feinteilchenförmigen Materials mehr als 150°C - sogenanntes heißes feinteilchenförmiges Material - so erfolgt der Transport des heißen feinteilchenförmigen Materials vorzugsweise mittels einer Heißfördervorrichtung. Liegt das feinteilchenförmige Material vor dessen Transport zum Brenner bereits als heißes feinteilchenförmiges Material vor, so kann das heiße feinteilchenförmige Material ohne dessen vorherige Abkühlung in heißem Zustand zum Brenner transportiert werden. Dies ist mit dem Vorteil einer Steigerung der Energieeffizienz verbunden, da die Wärmeenergie, die dem feinteilchenförmigen Material beispielsweise im Brenner oder im Reduktionsaggregat zur Durchführung des erfindungsgemäßen Verfahrens zugeführt werden muss, reduziert wird.

Eine Ausführungsform des erfindungsgemäßen Verfahrens zeichnet sich dadurch aus, dass der Brenner mit einem gasförmigen Brennstoff und/oder einem flüssigen Brennstoff und/oder einem festen Brennstoff und/oder mit einem sauerstoffhältigen Gas betrieben wird, wobei bei Betrieb des Brenners mit Brennstoff, der gasförmige Brennstoff und/oder der feste Brennstoff zumindest ein Mitglied aus der Gruppe bestehend aus den Mitgliedern: Produktgas aus einer CO₂-Entfernungsvorrichtung, Tailgas aus einer CO₂-Entfernungsvorrichtung, Kühlgas, Exportgas, Topgas, Offgas, Koksofengas, Erdgas, durch Druck verflüssigtes Gas, Gas aus Biomassevergasung, kohlenstoff- und/oder wasserstoffhältiges Gas und feste Kohlenstoffträger und/oder feste Kohlenwasserstoffträger umfasst.

Dadurch ergibt sich der Vorteil, dass sowohl die im Rahmen eines Roheisenherstellungsprozess anfallenden Prozessgase, die normalerweise einer teuren Aufbereitung vor ihrer Freisetzung in die Umwelt unterzogen werden müssten, erfindungsgemäß als Brennstoff für den Brenner eingesetzt werden können, und somit zur Steigerung der Energieeffizienz des Roheisenherstellungsprozesses führen. Sind solche Prozessgase nicht oder nicht in genügendem Ausmaß vorhanden, so können dem Brenner sämtliche herkömmlichen gasförmigen und festen Brennstoffe, sowie auch sauerstoffhältiges Gas zugeführt werden.

Eine weitere Ausführungsform des erfindungsgemäßen Verfahrens ist dadurch gekennzeichnet, dass der gasförmige Brennstoff und/oder der feste Brennstoff nach Austritt aus dem Brenner zumindest teilweise mit einem sauerstoffhältigen Gas oxidiert wird und das sauerstoffhältige Gas zumindest ein Mitglied aus der Gruppe bestehend aus den Mitgliedern Luft, Sauerstoff, Stickstoff und Dampf umfasst.

Der dem Brenner zugeführte Brennstoff wird unter Zugabe des sauerstoffhältigen Gases unter Bildung von Wärmeenergie und einer Flamme verbrannt. Das stöchiometrische Verhältnis zwischen dem sauerstoffhältigen Gas und dem Brennstoff kann dabei so gewählt werden, dass ein Überschuss an Sauerstoff vorhanden ist, wobei der Sauerstoff des sauerstoffhältigen Gases bei der Verbrennung nicht vollständig aufgebraucht wird. Dadurch erhält man eine sogenannte "oxidierende Flamme", welche, falls die eisenhältigen Partikel magnetitische Anteile aufweisen, die magnetitischen Anteile während des Einbringens in das Reduktionsaggregat zumindest teilweise durch Oxidation in hämatitische Anteile umwandelt beziehungsweise oxidiert. Dies hat den Vorteil eines effizienteren Reduktionsprozesses im Reduktionsaggregat, da Hämatit im Vergleich zu Magnetit leichter zu reduzieren ist.

Umgekehrt ist ein Betrieb des Brenners mit einer "reduzierenden Flamme" möglich, wobei das sauerstoffhältige Gas unterstöchiometrisch zu dem Brennstoff zugemischt wird. Der Magnetit wird durch die "reduzierende Flamme" während des Einbringens in das Reduktionsaggregat zumindest teilweise reduziert, was den späteren Reduktionsvorgang im Reduktionsaggregat ebenfalls positiv beeinflussen kann.

Eine besonders bevorzugte Ausführungsform des erfindungsgemäßen Verfahrens ist dadurch gekennzeichnet, dass bei Betrieb des Brenners ausschließlich mit dem sauerstoffhältigen Gas, das sauerstoffhältige Gas mit einer Wasserstoff und/oder Kohlenmonoxid und/oder Methan und/oder Kohlenwasserstoffe umfassenden Gasatmosphäre im Reduktionsaggregat umgesetzt wird.

Dabei wird zumindest eine Teilmenge der in unmittelbarer Nähe der in das Reduktionsaggregat brennenden Flamme vorhandenen Wasserstoff- und/oder Kohlenmonoxid- und/oder Methan- und/oder Kohlenwasserstoff - Komponenten der Gasatmosphäre des Reduktionsaggregates zusammen mit dem Sauerstoff des sauerstoffhältigen Gases verbrannt beziehungsweise oxidiert. Das hat den Vorteil, dass der Brenner nötigenfalls auch ohne von außen zugeführten Brennstoff betrieben werden kann. Die Kohlenwasserstoffe sind beispielsweise Ethan oder Propan oder oder Ethan und Propan umfassende Gasmischungen.

Umfasst die Gasatmosphäre des Reduktionsaggregates sauerstoffhältiges Gas, so ist eine weitere Ausführungsform der vorliegenden Erfindung dadurch gekennzeichnet, dass der dem Brenner zugeführte Brennstoff mit dem Sauerstoff, welcher in der Gasatmosphäre des Reduktionsaggregates vorhanden ist, verbrannt beziehungsweise oxidiert wird. Dabei wird zumindest eine Teilmenge des in unmittelbarer Nähe der in das Reduktionsaggregat brennenden Flamme vorhandenen Sauerstoffes der Gasatmosphäre des Reduktionsaggregates mit dem dem Brenner zugeführten Brennstoff verbrannt. Das hat den Vorteil, dass der Brenner nötigenfalls auch ohne eines von Außen zugeführten sauerstoffhältigen Gases betrieben werden kann.

Eine Ausführungsform des erfindungsgemäßen Verfahrens kennzeichnet sich dadurch, dass der feste Brennstoff mittels des Fördergases in den Brenner transportiert wird, wobei das Fördergas zumindest ein Mitglied aus der Gruppe bestehend aus den Mitgliedern Produktgas aus einer CO₂-Entfernungsvorrichtung, Tailgas aus einer CO₂-Entfernungsvorrichtung, Kühlgas, Exportgas, Topgas, Offgas, Koksofengas, Erdgas, Gas aus Biomassevergasung, kohlenstoff- und/oder wasserstoffhältiges Gas, Luft, Sauerstoff, Stickstoff und Dampf umfasst.

Eine weitere Ausführungsform des erfindungsgemäßen Verfahrens ist dadurch gekennzeichnet, dass zumindest eine Teilmenge des gasförmigen Brennstoffes und/oder zumindest eine Teilmenge des sauerstoffhältigen Gases als Fördergas für den pneumatischen Transport des feinteilchenförmigen Materials zum Brenner verwendet wird.

Eine andere Ausführungsform des erfindungsgemäßen Verfahrens ist dadurch gekennzeichnet, dass dem Brenner zumindest ein Feststoff, insbesondere Kohlenstoff- und/oder Kohlenwasserstoffträger wie Feinkoks und/oder Feinkohle zugeführt wird, welcher zusätzlich zu dem die eisenhältigen Partikel umfassenden feinteilchenförmigen Material mittels des Brenners in das Reduktionsaggregat eingebracht wird.

Der Feststoff wird dem Brenner getrennt von den eisenhältigen Partikeln zugeführt. Der Feststoff liegt in feinteilchenförmiger Form vor. Sowohl der Feststoff als auch das feinteilchenförmige Material werden dem Brenner in dosierter Menge zugeführt beziehungsweise von diesem in dosierter Menge in das Reduktionsaggregat eingebracht. Unter dem Ausdruck "in dosierter Menge" ist eine variierbare, pro Zeiteinheit dem Brenner zugeführte beziehungsweise mittels des Brenners in das Reduktionsaggregat eingebrachte Menge an feinteilchenförmigen Material und/oder Feststoff zu verstehen.

Mit der Zuführung des Feststoffes oder der Feststoffe in dosierter Menge kann die Brennflecktemperatur, neben der Regelung über die Brennerleistung und bei Betrieb des Brenners mit Brennstoff neben der Regelung über das Verhältnis des sauerstoffhältigen Gases zu Brennstoff, in einem definierten Bereich eingestellt werden. Unter Brennflecktemperatur ist die Temperatur in der unmittelbaren Umgebung der vom Brenner ausgehenden Flamme zu verstehen. Unter Brennerleistung ist die pro Zeiteinheit mittels des Brenners in das Reduktionsaggregat eingebrachte Energie, insbesondere Wärmeenergie, zu verstehen. Ist die Brennflecktemperatur höher, so agglomerieren die mittels des Brenners in das Reduktionsaggregat eingebrachten eisenhältigen Partikel während ihres Einbringens in der vom Brenner ausgehenden Flamme zu Agglomeraten, die in der Wirbelschicht des Reduktionsaggregates fluidisiert werden können. Ist die Brennflecktemperatur jedoch zu hoch, so entstehen zu große Agglomerate, die in der Wirbelschicht nicht mehr fluidisiert werden können. Unter Umständen agglomerieren auch die die Wirbelschicht bildenden Partikel zu zu großen Agglomeraten, die in der Wirbelschicht nicht mehr fluisisiert werden können. Die Bildung dieser zu großen Agglomerate kann zu einem Versagen der Wirbelschicht durch Defluidisierung der Wirbelschicht - die Agglomerate können in der Wirbelschicht nicht mehr fluidisiert werden - führen. Die Wirbelschicht kann unter diesen Umständen nicht mehr aufrecht erhalten werden. Ist die Brennflecktemperatur andererseits gering, so findet während des Einbringens der eisenhältigen Partikel in das Reduktionsaggregat mittels des Brenners keine oder eine nur geringe Agglomerierung der eisenhältigen Partikel zu Agglomeraten statt. Bei entsprechend geringen Korngrößen der eingebrachten eisenhältigen Partikel beziehungsweise der gebildeten Agglomerate werden diese sofort nach ihrem Einbringen in das Reduktionsaggregat wieder aus diesem ausgetragen. Die Brennflecktemperatur zum Zweck der Agglomerierung wird derart eingestellt, dass einerseits der Austrag der eisenhältigen Partikel aus dem Reduktionsaggregat minimal und andererseits die Aufrechterhaltung der Wirbelschicht im Reduktionsaggregat gewährleistet ist.

In einer Variante wird die Brennflecktemperatur über die pro Zeiteinheit in das Reduktionsaggregat mittels des Brenners eingebrachte Menge an feinteilchenförmigen Material beziehungsweise den darin enthaltenen eisenhältigen Partikeln eingestellt beziehungsweise geregelt.

Eine weitere Ausführungsform des erfindungsgemäßen Verfahrens ist dadurch gekennzeichnet, dass das feinteilchenförmige Material vor Einbringen in die Wirbelschicht und/oder in den Freiraum über der Wirbelschicht in einer Speichervorrichtung gesammelt und gegebenenfalls nachfolgend einer der Speichervorrichtung zugeordneten Druckanpassungsvorrichtung zugeführt wird.

Die Druckanpassungsvorrichtung kann insbesondere als sogenanntes "lock hopper system" oder als "dispensing vessel" ausgebildet sein. Das Sammeln des feinteilchenförmigen Materials in der Speichervorrichtung hat den Vorteil, dass auch im Fall einer diskontinuierlichen Förderung des feinteilchenförmigen Materials in die Speichervorrichtung ein kontinuierliches Einbringen des feinteilchenförmigen Materials in die Wirbelschicht und/oder in den Freiraum über der Wirbelschicht möglich ist. Das heißt, ein diskontinuierlicher Prozess wird dadurch in einen kontinuierlichen Prozess übergeführt. Weiters wird durch die der Speichervorrichtung zugeordneten Druckanpassungsvorrichtung eine gesicherte Förderung des feinteilchenförmigen Materials in den Brenner auch bei Schwankungen des Druckes der Gasatmosphäre im Reduktionsreaktor gewährleistet, da der Druck der das feinteilchenförmige Material umgebenden Gasatmosphäre dem Druck der Gasatmosphäre im Reduktionsaggregat angepasst werden kann.

Die das feinteilchenförmige Material umgebende Gasatmosphäre kann beispielsweise ein Inertgas, insbesondere ein Stickstoff umfassendes Gas, oder ein reduzierendes Gas, insbesondere wasserstoff- und kohlenmonoxidhältiges Gas, sein.

Ein weiterer Gegenstand der vorliegenden Erfindung ist eine Vorrichtung zur Durchführung des erfindungsgemäßen Verfahrens mit zumindest einem Reduktionsaggregat, wobei zumindest ein Brenner mit einer Materialzufuhrleitung zur Zufuhr von eisenhältige Partikel umfassendem feinteilchenförmigem Material in den Brenner vorhanden ist und das Reduktionsaggregat ein Reduktionsaggregat mit Wirbelschicht, insbesondere ein Wirbelschichtreduktionsaggregat ist, der Brenner in den Innenraum des Reduktionsaggregates mündet und der Brenner eine Einbringleitung zum Einbringen des feinteilchenförmigen Materials in den Innenraum des Reduktionsaggregates aufweist.

Sind mehrere Reduktionsaggregate vorhanden, so können auch mehrere Brenner zur Zufuhr des eisenhältige Partikel umfassenden Materials vorhanden sein. Die Brenner sind dabei so angeordnet, dass das feinteilchenförmige Material direkt in die Wirbelschicht und/oder in den Freiraum über der Wirbelschicht des Reduktionsaggregates eingebracht werden kann. Beispielsweise sind pro Reduktionsaggregat ein erster Brenner zum Einbringen des feinteilchenförmigen Materials direkt in die Wirbelschicht und ein zweiter Brenner zum Einbringen des feinteilchenförmigen Materials direkt in den Freiraum über der Wirbelschicht des Reduktionsaggregates vorhanden. Die Brenner können dabei an beliebigen Stellen am Mantel des Reduktionsaggregates angeordnet sein. Handelt es sich um einen Anlagenverbund, insbesondere um einen FINEX^{®} - Anlagenverbund mit mehreren in Kaskade angeordneten Reduktionsaggregaten, so können pro Reduktionsaggregat ein oder mehrere Brenner zum Einbringen des feinteilchenförmigen Materials in das jeweilige Reduktionsaggregat vorhanden sein, es ist aber auch möglich, dass nur bei einigen Reduktionsaggregaten ein Brenner vorhanden ist.

Eine Ausführungsform der erfindungsgemäßen Vorrichtung ist dadurch gekennzeichnet, dass der Brenner eine Gaszufuhrleitung zur Zufuhr von sauerstoffhältigem Gas und/oder eine Brennstoffzufuhrleitung zur Zufuhr von gasförmigen und/oder flüssigen und/oder festen Brennstoffen in den Brenner umfasst.

Eine weitere Ausführungsform der Erfindung zeichnet sich dadurch aus, dass dem zumindest einen Reduktionsaggregat eine Trockenentstaubungsvorrichtung zur Entstaubung von Gas, insbesondere Offgas aus dem zumindest einen Reduktionsaggregat, zugeordnet ist.

Das staubbeladene Offgas aus dem zumindest einen Reduktionsaggregat wird aus diesem abgezogen und mittels einer Trockenentstaubungsvorrichtung, beispielsweise mittels Heißgasfiltern, oder in dem Fall, in dem das Offgas nach dem Abziehen aus dem Reduktionsaggregat eine Vorrichtung zum Wärmetausch durchströmt, in abgekühltem Zustand mittels normaler Entstaubungsfilter, von dem im Offgas enthaltenen Staub befreit.

Eine Ausführungsform der erfindungsgemäßen Vorrichtung ist dadurch gekennzeichnet, dass die Materialzufuhrleitung zur Zufuhr des eisenhältige Partikel umfassenden feinteilchenförmigen Materials von zumindest einer Speichervorrichtung zur Speicherung des feinteilchenförmigen Materials ausgeht.

Bei einer weiteren Ausführungsform der Erfindung ist eine in den Brenner und/oder in die Gaszufuhrleitung und/oder in die Brennstoffzufuhrleitung mündende Feststoffzufuhrleitung zur Zufuhr von Feststoff in den Brenner und/oder zur Zufuhr des Feststoffs in die Gaszufuhrleitung und/oder zur Zufuhr des Feststoffs in die Brennstoffzufuhrleitung vorhanden.

Eine weitere Ausführungsform der erfindungsgemäßen Vorrichtung ist dadurch gekennzeichnet, dass der Speichervorrichtung eine Druckanpassungsvorrichtung zur Einstellung des Druckes der das feinteilchenförmige Material umgebenden Gasatmosphäre zugeordnet ist.

Eine geeignete Druckanpassungsvorrichtung ist beispielsweise ein "lock hopper system" oder ein "dispensing vessel". Der Druck der das feinteilchenförmige Material umgebende Gasatmosphäre wird vor der Zuführung des feinteilchenförmigen Materials in den Brenner beziehungsweise vor dem Einbringen des feinteilchenförmigen Materials in das Reduktionsaggregat beispielsweise auf einen im Vergleich zum Druck im Reduktionsaggregat höheren Druck gebracht, wodurch eine Förderung des feinteilchenförmigen Material in das Reduktionsaggregat ermöglicht wird.

Eine Ausführungsform der erfindungsgemäßen Vorrichtung zeichnet sich dadurch aus, dass eine pneumatische Fördereinrichtung zur pneumatischen Förderung des feinteilchenförmigen Materials in den Brenner vorhanden ist.

Eine weitere Ausführungsform der erfindungsgemäßen Vorrichtung zeichnet sich dadurch aus, dass dem Brenner das sauerstoffhältige Gas mittels der Materialzufuhrleitung zuführbar ist.

Bei dieser Ausführungsform der erfindungsgemäßen Vorrichtung werden das feinteilchenförmige Material und das sauerstoffhältige Gas mittels der Materialzufuhrleitung in den Brenner und mittels der Einbringleitung in den Innenraum des Reduktionsaggregates eingebracht.

Ein weiterer Gegenstand der Erfindung ist die Verwendung des erfindungsgemäßen Verfahrens zur Herstellung von flüssigem Roheisen oder flüssigen Stahlvorprodukten mittels eines Schmelzreduktionsprozesses in einer Schmelzreduktionsanlage, wobei feinteilchenförmiges Material erfindungsgemäß in ein Reduktionsaggregat eingebracht wird und das feinteilchenförmige Material, gegebenenfalls unter Zugabe von Zusatzstoffen und feinteilchenförmigen eisenoxidhältigen Einsatzstoffen, in dem Reduktionsaggregat mittels eines Reduktionsgases zumindest teilweise zu den Eisenvorprodukten reduziert wird, und die Eisenvorprodukte in einem Schmelzreduktionsaggregat, unter Zugabe eines sauerstoffhältigen Gases und kohlenstoffhältiger Energieträger, unter Bildung des Reduktionsgases zu flüssigem Roheisen oder flüssigen Stahlvorprodukten aufgeschmolzen werden.

Eisenvorprodukte sind im Reduktionsaggregat hergestellte Produkte, die in einem Aggregat, beispielsweise in einem Schmelzreduktionsaggregat, welches mit dem Reduktionsaggregat einen Anlagenverbund bildet, zu flüssigem Roheisen oder flüssigen Stahlvorprodukten aufgeschmolzen werden. Die Eisenvorprodukte sind beispielsweise Eisenschwamm und/oder DRI (direct reduced iron) und werden gegebenenfalls vor dem Einsatz im Schmelzreduktionsaggregat zu Briketts, hot compacted iron (HCI) oder zu kalt oder heiß brikettiertem Eisen (CBI,HBI) kompaktiert. Die in das Schmelzreduktionsaggregat eingebrachten kohlenstoffhältigen Energieträger sind beispielsweise Kohlebriketts und/oder Stückkohlen und/oder Koks und/oder kohlenwasserstoffhältige feste, flüssige oder gasförmige Stoffe und/oder Feinkohle und/oder Plastik und/oder Schweröl und/oder Erdgas.

Ein Gegenstand der Erfindung ist die Verwendung des erfindungsgemäßen Verfahrens zur Herstellung von Eisenprodukten mittels eines Direktreduktionsprozesses in einer Direktreduktionsanlage, wobei feinteilchenförmiges Material erfindungsgemäß in ein Reduktionsaggregat eingebracht wird und das feinteilchenförmige Material, gegebenenfalls unter Zugabe von Zusatzstoffen und feinteilchenförmigen eisenoxidhältigen Einsatzstoffen, in dem Reduktionsaggregat mittels eines Reduktionsgases zumindest teilweise zu den Eisenprodukten reduziert wird.

Gegebenenfalls werden die Eisenprodukte nach ihrer Herstellung im Reduktionsaggregat noch einer Stückigmachung unterzogen. Die Stückigmachung erfolgt beispielsweise in Form einer Kalt- oder Heißbrikettierung der Eisenprodukte zu kalt oder heiß brikettiertem Eisen (CBI,HBI) oder in Form einer Heißkompaktierung zu hot compacted iron (HCI).

Eisenprodukte sind Produkte, die beispielsweise zur Weiterverarbeitung verkauft werden - jedoch auch in einem angeschlossenen Stahlwerk, beispielsweise mittels eines Elektrolichtbogenofens, zu Stahl weiterverarbeitet werden.

### Kurze Beschreibung der Zeichnungen

Die Erfindung wird nachfolgend in beispielhafter Weise anhand der beigefügten Figuren erläutert.
FIG 1 zeigt beispielhaft und schematisch ein erfindungsgemäßes Verfahren und eine erfindungsgemäße Vorrichtung mit einem Wirbelschichtreduktionsaggregat.
FIG 2 zeigt beispielhaft und schematisch eine spezielle Ausführungsform des erfindungsgemäßen Verfahrens und der erfindungsgemäßen Vorrichtung mit mehreren Wirbelschichtreduktionsaggregaten.
FIG 3 zeigt beispielhaft und schematisch, ergänzend zu den FIG 1 und FIG 2, einen Ausschnitt des erfindungsgemäßen Verfahrens und der erfindungsgemäßen Vorrichtung in einem FINEX^{®} - Anlagenverbund, umfassend eine Darstellung von unterschiedlichen Herkunftsquellen des gasförmigen Brennstoffes, des Fördergases und des feinteilchenförmigen Materials.

### Beschreibung der Ausführungsformen

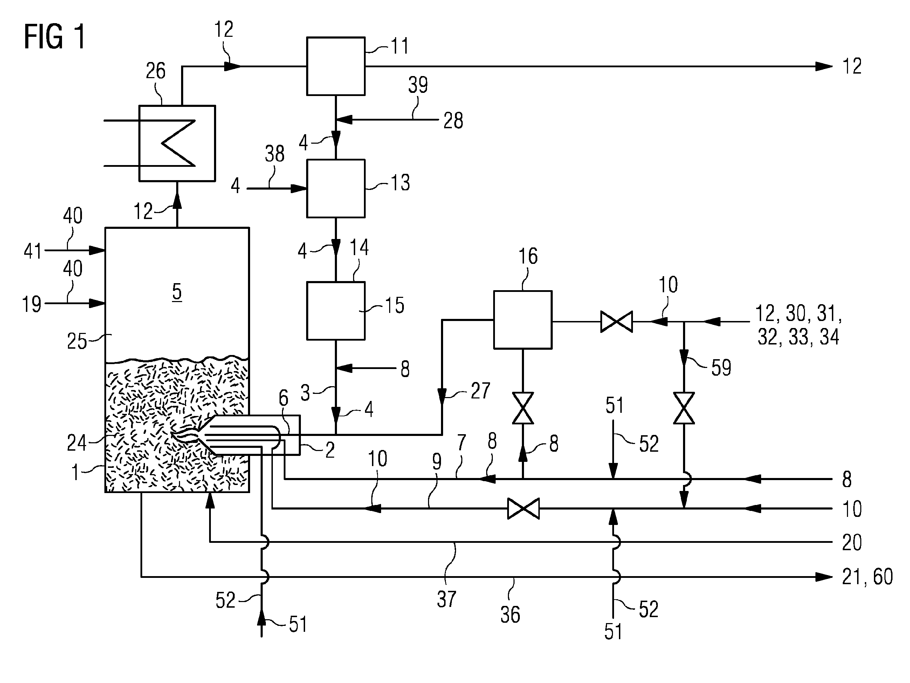

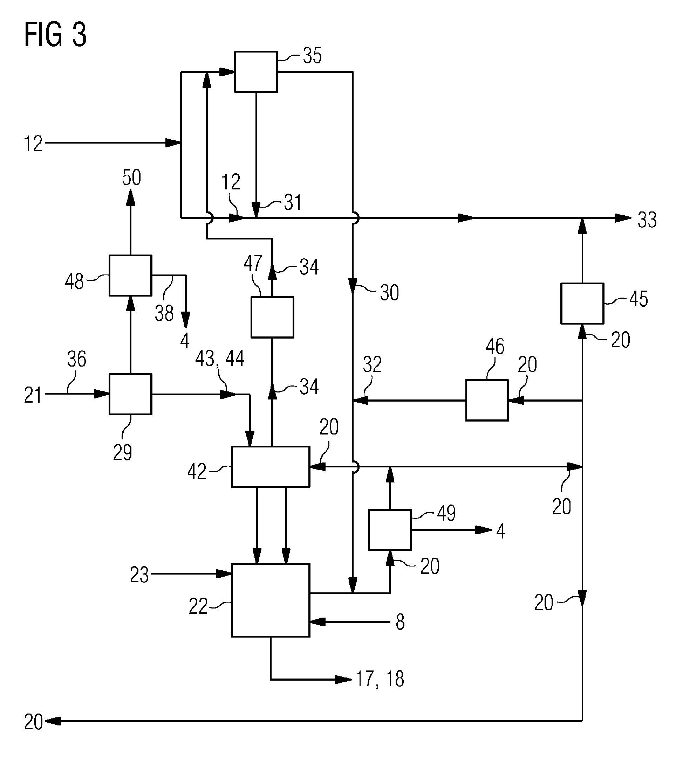

FIG 1 zeigt beispielhaft und schematisch das erfindungsgemäße Verfahren und die erfindungsgemäße Vorrichtung, bei dem eisenhältige Partikel umfassendes feinteilchenförmiges Material (4) mittels eines Brenners (2) in die Wirbelschicht (24) eines Reduktionsaggregates (1), welches als Wirbelschichtreduktionsaggregat mit einer Wirbelschicht (24) ausgebildet ist, eingebracht wird. Das feinteilchenförmige Material (4) wird über eine Materialzufuhrleitung (3) zum Brenner (2) befördert, wo es mittels einer im Brenner (2) angeordneten Einbringleitung (6) in den Innenraum (5) des Reduktionsaggregates (1) eingebracht wird. Zusätzlich werden über die Transportleitungen (40) feinteilchenförmige eisenoxidhältige Einsatzstoffe (41) sowie Zusatzstoffe (19) in den Innenraum (5) des Reduktionsaggregates (1) chargiert. Mittels eines über eine Reduktionsgasleitung (37) eingebrachten Reduktionsgases (20) in den Innenraum (5) des Reduktionsaggregates (1), beziehungsweise in die Wirbelschicht (24) des Reduktionsaggregates (1), erfolgt die Reduktion der im feinteilchenförmigen Material (4) enthaltenen eisenhältigen Partikel und der feinteilchenförmigen eisenoxidhältigen Einsatzstoffe (41) zu Eisenvorprodukten (21) und/oder Eisenprodukten (60), welche über eine Austragleitung (36) aus dem Reduktionsaggregat (1) ausgetragen werden. Die eisenhältigen Partikel umfassen beispielsweise Magnetitpartikel, Staub aus einer Entstaubungsvorrichtung, insbesondere aus einer Trockenentstaubungsvorrichtung (11), Staub aus einer einer in FIG 3 dargestellten Kompaktiervorrichtung (29) zugeordneten und in FIG 3 dargestellten Trockenentstaubungsvorrichtung (48), insbesondere aus einer Heißkompaktiervorrichtung (hot compacted iron plant), Staub aus einer Brikettiervorrichtung oder Staub aus einer Heißbrikettiervorrichtung oder Hüttenwerkstäube, insbesondere Stäube aus einer Gießhallenentstaubung oder Staub aus einer in FIG 3 dargestellten Trockenentstaubungsvorrichtung (49) zur Entstaubung eines Reduktionsgases (20), welches aus einem in FIG 3 dargestellten Schmelzreduktionsaggregat (22) abgezogen wird.. Das bei der Reduktion der im feinteilchenförmigen Material (4) enthaltenen eisenhältigen Partikel und der feinteilchenförmigen eisenoxidhältigen Einsatzstoffe (41) verbrauchte Reduktionsgas (20) wird als staubbeladenes Offgas (12) aus dem Reduktionsaggregat (1) abgezogen und einem Wärmetausch in der Wärmetauschvorrichtung (26) unterzogen, wobei das Offgas (12) abgekühlt wird. Das staubbeladene und abgekühlte Offgas (12) wird anschließend in der Trockenentstaubungsvorrichtung (11) entstaubt, wobei das mit dem Offgas (12) mitbeförderte feinteilchenförmige Material (4) abgeschieden wird. Das abgeschiedene feinteilchenförmige Material (4) wird in einer Speichervorrichtung (13) zwischengespeichert. In die Speichervorrichtung (13) mündet eine Staubzufuhrleitung (38) zur Zufuhr des feinteilchenförmigen Materials (4), welches beispielsweise aus einer oder mehreren der oben genannten Quellen stammt oder aus in FIG 3 dargestellten Wäschern (45, 46, 47) abgeschieden, und, falls erforderlich nach einer Trocknung, als feinteilchenförmiges Material (4) über die Staubzufuhrleitung (38) der Speichervorrichtung (13) zugeführt wird. Gegebenenfalls werden dem feinteilchenförmigen Material (4) mittels einer Zufuhrleitung (39) kohlenstoffhältige Stoffe (28) zugemischt. Die Zumischung der kohlenstoffhältigen Stoffe (28) kann vor, in oder nach der Speichervorrichtung (13) erfolgen. Der Speichervorrichtung (13) ist eine Druckanpassungsvorrichtung (14) zur Einstellung des Druckes der das feinteilchenförmige Material (4) umgebenden Gasatmosphäre (15) zugeordnet. Ist beispielsweise der Druck im Reduktionsaggregat (1) höher als der Druck der das feinteilchenförmige Material (4)umgebenden Gasatmosphäre (15), so wird mittels der Druckanpassungsvorrichtung (14) der Druck der Gasatmosphäre (15) in der Druckanpassungsvorrichtung (14) auf einen den Druck im Reduktionsaggregat (1) übersteigenden Wert angehoben, bevor das feinteilchenförmige Material (4) pneumatisch mittels der pneumatischen Fördereinrichtung (16) von der Druckanpassungsvorrichtung (14) über die Materialzufuhrleitung (3) zum Brenner (2) gefördert wird. Das feinteilchenförmige Material wird von einem aus der pneumatischen Fördereinrichtung (16) stammenden Fördergas (27) mitbefördert beziehungsweise mitgeblasen oder mitgesogen. Der Brenner (2) ist mit der Materialzufuhrleitung (3) verbunden, welche in die Einbringleitung (6) zum Einbringen des feinteilchenförmigen Materials (4) in den Innenraum (5) des Reduktionsaggregates (1) mündet. Zusätzlich verfügt der Brenner (2) über eine Gaszufuhrleitung (7) zur Zufuhr eines sauerstoffhältigen Gases (8), vorzugsweise Luft, technischer Sauerstoff, Stickstoff oder Dampf, und über eine Brennstoffzufuhrleitung (9) zur Zufuhr von gasförmigen und/oder flüssigen und/oder festen Brennstoffen (10) in den Brenner (2). Der Brenner (2) verfügt auch über eine Feststoffzufuhrleitung (52) zur Zufuhr von Feststoff (51), insbesondere zur Zufuhr von festen Eisenträgern in den Brenner (2). Die Feststoffzufuhrleitung (52) mündet zusätzlich in die Gaszufuhrleitung (7) und in die Brennstoffzufuhrleitung (9). Der Brenner (2) ist derart konzipiert, dass in - beziehungsweise an - der in den Innenraum (5) des Reduktionsaggregates (1) mündenden Brennerspitze des Brenners (2) das sauerstoffhältige Gas (8), der Brennstoff (10), das über die Einbringleitung (6) in den Brenner (2) eingebrachte feinteilchenförmige Material (4) und der Feststoff (51) mischbar sind. Nach Zündung dieses Gemisches wird eine aus der Brennermündung ragende Flamme gebildet, durch welche das feinteilchenförmige Material (4) in den Innenraum (5) des Reduktionsaggregates eingebracht wird.

Handelt es sich bei dem Brennstoff (10) um festen Brennstoff (10), beispielsweise feinteilchenförmiges kohlenstoffhältiges Material, so wird der feste Brennstoff (10) mittels des Fördergases (59) in den Brenner (2) transportiert. Bei Verwendung eines gasförmigen Brennstoffes (10) kann der Brennstoff (10) direkt als Fördergas (27) für die pneumatische Förderung des feinteilchenförmigen Materials (4) in den Brenner (2) genutzt werden. Dabei wird der gasförmige Brennstoff (10) direkt der pneumatischen Fördereinrichtung (16) zugeführt. Bei einer speziellen Ausführungsform der Erfindung wird zumindest eine Teilmenge des sauerstoffhältigen Gases (8) als Fördergas (27) verwendet, wobei eine Teilmenge des sauerstoffhältigen Gases (8) der pneumatischen Fördereinrichtung (16) zugeführt wird. Als Brennstoff (10) oder Fördergas (27) kommen beispielsweise Offgas (12), Produktgas (30), Tailgas (31), Kühlgas (32), Exportgas (33), Topgas (34) oder Ventgas (50) in Frage. Diese Gase werden dem Brenner mittels der Brennstoffzufuhrleitung (9) zugeführt. Diese Gase können auch der pneumatischen Fördereinrichtung (16) zugeführt werden.

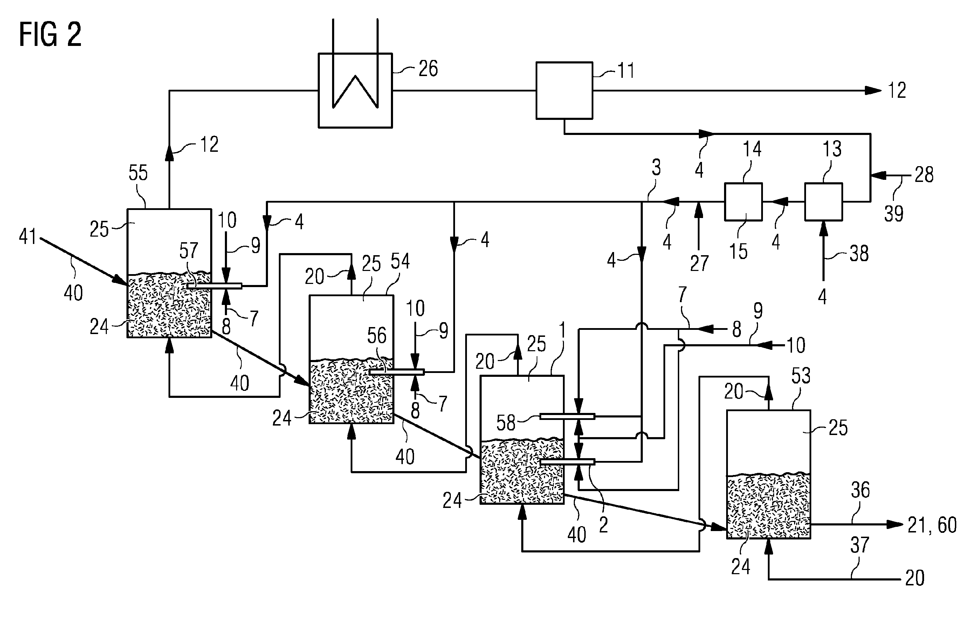

In FIG 2 ist beispielhaft und schematisch eine spezielle Ausführungsform des erfindungsgemäßen Verfahrens und der erfindungsgemäßen Vorrichtung mit mehreren Wirbelschichtreduktionsaggregaten dargestellt.

Diese Ausführungsform umfasst 4 Reduktionsaggregate (1,53,54,55) mit jeweils einer Wirbelschicht (25), wobei das Reduktionsgas (20) zunächst über die Reduktionsgasleitung (37) in das Reduktionsaggregat (53) eingeleitet wird. Nach Reduktion der über die Transportleitung (40) in das Reduktionsaggregat (53) eingebrachten feinteilchenförmigen eisenoxidhältigen Einsatzstoffe (41) und des sich im Reduktionsaggregat (53) befindenden eisenhältige Partikel umfassenden feinteilchenförmigen Materials (4) zu Eisenvorprodukten (21) und/oder Eisenprodukten (60) werden die Eisenvorprodukte (21) und/oder Eisenprodukte (60) mittels der Austragleitung (36) aus dem Reduktionsaggregat (53) ausgetragen und gegebenenfalls weiteren Bearbeitungsstufen zugeführt. Anschließend wird das bei der Reduktion im Reduktionsaggregat (53) teilweise verbrauchte Reduktionsgas (20) aus diesem abgezogen und in das Reduktionsaggregat (1) eingebracht. In dieses Reduktionsaggregat (1) wird das über die Brenner (2, 58) in die Wirbelschicht (24) beziehungsweise in den Freiraum (25) über der Wirbelschicht (24) eingebrachte feinteilchenförmige Material (4) und die feinteilchenförmigen eisenoxidhältigen Einsatzstoffe (41) mittels des aus dem Reduktionsaggregat (53) abgezogenen, teilweise verbrauchten Reduktionsgases (20) reduziert, wobei wiederum ein Teil des Reduktionsgases (20) verbraucht und aus dem Reduktionsaggregat (1) abgezogen wird. Nach Einbringen des Reduktionsgases (20) in die Reduktionsaggregate (54) und (55), in denen das mittels der diesen zugeordneten Brenner (56) und (57) eingebrachte feinteilchenförmige Material (4) und die über die Transportleitung (40) eingebrachten feinteilchenförmigen eisenoxidhältign Einsatzstoffe (41) reduziert werden, wird das Reduktionsgas (20) als Offgas (12) aus dem Reduktionsaggregat (55) abgezogen. Die Richtung des Materialflusses der feinteilchenförmigen eisenoxidhältigen Einsatzstoffe (41) und des Reduktionsgases (20) ist bei dem in FIG 3 dargestellten Verfahren, dem FINEX^{®} - Verfahren, entgegengesetzt. Während das Reduktiongas (20) ausgehend vom Reduktionsaggregat (53) nacheinander die Reduktionsaggregate (1), (54) und (55) durchströmt, werden die reduzierten feinteilchenförmigen eisenoxidhältigen Einsatzstoffe (41) und die reduzierten eisenhältigen Partikel, welche im feinteilchenförmigen Material enthalten sind, mittels der Transportleitung (40) in die entgegengesetzte Richtung transportiert um letztendlich als Eisenvorprodukte (21) und/oder Eisenvorprodukte (60) über die Austragleitung (36) aus dem Reduktionsaggregat (53) ausgetragen zu werden. Die hier nicht beschriebenen und in FIG 2 dargestellten Merkmale entsprechen den in Zusammenhang mit FIG 1 beschriebenen Merkmalen.

In FIG 3 sind beispielhaft und schematisch, in Ergänzung zu den FIG 1 und FIG 2, unterschiedliche Herkunftsquellen des gasförmigen Brennstoffes (10), des Fördergases (27) und des feinteilchenförmigen Materials (4) dargestellt.

Die über die Austragleitung (36) aus dem in FIG 2 dargestellten Reduktionsaggregat (53) als DRI ausgetragenen Eisenvorprodukte (21) werden vor dem Einsatz in einem Schmelzreduktionsaggregat (22) mittels einer Kompaktiervorrichtung (29) zu HCI (43) - hot compacted iron - oder zu Briketts (44) umgeformt, welche über die Chargiervorrichtung (42) in das Schmelzreduktionsaggregat (22) chargiert werden. Dort wird das HCI (43) beziehungsweise werden die Briketts (44) unter Zugabe eines sauerstoffhältigen Gases (8) und kohlenstoffhältiger Energieträger (23), beispielsweise Stückkohle, unter Bildung des Reduktionsgases (20) zu flüssigem Roheisen (17) oder flüssigen Stahlvorprodukten (18) aufgeschmolzen und aus dem Schmelzreduktionsaggregat (22) ausgetragen. Das aus dem Schmelzreduktionsaggregat (22) abgezogene, staubbeladene Reduktionsgas (20) wird in der Trockenentstaubungsvorrichtung (49) entstaubt und eine erste Teilmenge des entstaubten Reduktionsgases (20) wird in die Chargiervorrichtung (42) eingebracht, um eine Rückoxidation der in die Chargiervorrichtung (42) eingebrachten Eisenvorprodukte (21) zu vermeiden. Die in die Chargiervorrichtung (42) eingebrachte erste Teilmenge des entstaubten Reduktionsgases (20) wird aus dieser als Topgas (34) abgezogen und gegebenenfalls nach einer Nassreinigung im Wäscher (47) einer CO₂-Entfernungseinrichtung (35) zugeführt. Eine zweite Teilmenge des entstaubten Reduktionsgases (20) wird einer Nassreinigung im Wäscher (46) unter Erhalt des Kühlgases (32) unterzogen, bevor es dem aus dem Schmelzreduktionsaggregat (22) abgezogenen Reduktionsgas (20) vor dessen Entstaubung in der Trockenentstaubungsvorrichtung (49) zugemischt wird. Eine dritte Teilmenge des entstaubten Reduktionsgases (20) wird in zumindest eines der in FIG 2 dargestellten Reduktionsaggregate (53,1,54,55) rückgeführt, während eine vierte Teilmenge des entstaubten Reduktionsgases (20) einer Nassreinigung im Wäscher (45) unterzogen wird.

Eine erste Teilmenge des Offgases (12), welches aus dem in FIG 2 dargestellten Reduktionsaggregat (55) abgezogen wird, wird nach dessen Reinigung in der Trockenentstaubungsvorrichtung (11) einer CO₂ - Entfernung in der CO₂ - Entfernungsvorrichtung (35) unter Bildung eines CO₂ - armen Produktgases (30) und eines CO₂ - reichen Tailgases (31) unterzogen. Die zweite Teilmenge des aus dem Reduktionsaggregat (55) abgezogenen Offgases (12) verlässt ohne vorherige CO₂ - Entfernung als Exportgas (33) den FINEX^{®} - Anlagenverbund. Das Produktgas (30) wird dem aus dem Schmelzreduktionsaggregat (22) abgezogenen, staubbeladenen Reduktionsgas (20) vor dessen Entstaubung in der Trockenentstaubungsvorrichtung (49) zugemischt. Beispielsweise werden das Produktgas (30), das Tailgas (31), das Kühlgas (32), das Exportgas (33), das Topgas (34), und das Offgas (12) zumindest zum Teil sowohl als gasförmiger Brennstoff (10) als auch als Fördergas (27) eingesetzt. Das bei der Entstaubung des Ventgases (50) in der Trockenentstaubungsvorrichtung (48) beziehungsweise das bei der Entstaubung des aus dem Schmelzreduktionsaggregat (22) abgezogenen Reduktionsgases (20) in der Trockenentstaubungsvorrichtung (49) abgeschiedene feinteilchenförmige Material (4) wird beispielsweise mittels der Staubzufuhrleitung (38) der Speichervorrichtung (13) zugeführt. Gegebenenfalls werden die in den Wäschern (45), (46) und (47) abgeschiedenen Schlämme, falls erforderlich nach deren Trocknung, als feinteilchenförmiges Material (4) ebenfalls über die Staubzufuhrleitung (38) der Speichervorrichtung (13) zugeführt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

- 1: Reduktionsaggregat
- 2: Brenner
- 3: Materialzufuhrleitung
- 4: feinteilchenförmiges Material
- 5: Innenraum
- 6: Einbringleitung
- 7: Gaszufuhrleitung
- 8: sauerstoffhältiges Gas
- 9: Brennstoffzufuhrleitung
- 10: Brennstoff
- 11: Trockenentstaubungsvorrichtung
- 12: Offgas
- 13: Speichervorrichtung
- 14: Druckanpassungsvorrichtung
- 15: Gasatmosphäre
- 16: pneumatische Fördereinrichtung
- 17: flüssiges Roheisen
- 18: flüssige Stahlvorprodukte
- 19: Zusatzstoffe
- 20: Reduktionsgas
- 21: Eisenvorprodukte
- 22: Schmelzreduktionsaggregat
- 23: kohlenstoffhältige Energieträger
- 24: Wirbelschicht
- 25: Freiraum
- 26: Wärmetauschvorrichtung
- 27: Fördergas
- 28: kohlenstoffhältige Stoffe
- 29: Kompaktiervorrichtung
- 30: Produktgas
- 31: Tailgas
- 32: Kühlgas
- 33: Exportgas
- 34: Topgas
- 35: CO₂-Entfernungsvorrichtung
- 36: Austragleitung
- 37: Reduktionsgasleitung
- 38: Staubzufuhrleitung
- 39: Zufuhrleitung
- 40: Transportleitung
- 41: feinteilchenförmige eisenoxidhältige Einsatzstoffe
- 42: Chargiervorrichtung
- 43: HCI (hot compacted iron)
- 44: Briketts
- 45: Wäscher
- 46: Wäscher
- 47: Wäscher
- 48: Trockenentstaubungsvorrichtung
- 49: Trockenentstaubungsvorrichtung
- 50: Ventgas
- 51: Feststoff
- 52: Feststoffzufuhrleitung
- 53: Reduktionsaggregat
- 54: Reduktionsaggregat
- 55: Reduktionsaggregat
- 56: Brenner
- 57: Brenner
- 58: Brenner
- 59: Fördergas
- 60: Eisenprodukte

## Patentansprüche

1. Verfahren zum Einbringen von eisenhältige Partikel umfassendem feinteilchenförmigem Material (4) in ein Reduktionsaggregat (1), **dadurch gekennzeichnet, dass** das Reduktionsaggregat (1) ein Reduktionsaggregat (1) mit Wirbelschicht (24), insbesondere ein Wirbelschichtreduktionsaggregat, ist und das Einbringen des feinteilchenförmigen Materials (4) mittels eines Brenners (2) direkt in die Wirbelschicht (24) und/oder in einen Freiraum (25) über der Wirbelschicht (24) des Reduktionsaggregates (1) erfolgt.

2. Verfahren nach Anspruch 1, **dadurch gekennzeichnet, dass** zumindest eine Teilmenge des feinteilchenförmigen Materials (4) aus einer Entstaubungsvorrichtung, insbesondere einer Trockentstaubungsvorrichtung (11), eines Schmelzreduktionsaggregates und/oder einer Direktreduktionsanlage stammt.

3. Verfahren nach einem der vorangegangenen Ansprüche, **dadurch gekennzeichnet, dass** zumindest bei einer Teilmenge des die eisenhältigen Partikel umfassenden feinteilchenförmigen Materials (4) während des Einbringens mittels des Brenners (2) zumindest eine Reaktion aus der Gruppe bestehend aus den Reaktionen:
a. Oxidation der eisenhältigen Partikel,
b. Reduktion der eisenhältigen Partikel,
c. Vergrößerung der Porosität der eisenhältigen Partikel,
d. Trocknung des feinteilchenförmigen Materials (4),
e. zumindest teilweises Aufschmelzen des feinteilchenförmigen Materials (4), wobei das zumindest teilweise aufgeschmolzene feinteilchenförmige Material (4)agglomeriert und in Form von Agglomeraten eingebracht wird,
abläuft.

4. Verfahren nach einem der vorangegangenen Ansprüche, **dadurch gekennzeichnet, dass** das feinteilchenförmige Material (4) mittels eines Fördergases (27) pneumatisch zum Brenner (2) transportiert wird.

5. Verfahren nach einem der vorangegangenen Ansprüche, **dadurch gekennzeichnet, dass** die eisenhältigen Partikel zumindest ein Mitglied aus der Gruppe bestehend aus den Mitgliedern:
a. Magnetitpartikel,
b. Staub aus einer Entstaubungsvorrichtung, insbesondere einer Trockenentstaubungsvorrichtung (11),
c. Offgasstaub aus einer Trockenentstaubungsvorrichtung (11),
d. Staub aus einer Kompaktiervorrichtung (29), insbesondere aus einer Heißkompaktiervorrichtung (Hot Compacted Iron Plant), aus einer Brikettiervorrichtung oder aus einer Heißbrikettiervorrichtung,
e. Hüttenwerkstäube, insbesondere Stäube aus einer Gießhallenentstaubung,
f. Feineisenerze, vorzugsweise Feineisenerze < 200µm
umfassen.

6. Verfahren nach einem der vorangegangenen Ansprüche, **dadurch gekennzeichnet, dass** das feinteilchenförmige Material (4) kohlenstoffhältige Stoffe (28) umfasst und/oder mit einer Temperatur von vorzugsweise mehr als 150°C zum Brenner (2) transportiert wird.

7. Verfahren nach einem der vorangegangenen Ansprüche **dadurch gekennzeichnet, dass** der Brenner (2) mit einem gasförmigen Brennstoff (10) und/oder einem flüssigen Brennstoff (10) und/oder einem festen Brennstoff (10) und/oder mit einem sauerstoffhältigen Gas (8) betrieben wird, wobei bei Betrieb des Brenners (2) mit Brennstoff (10) der gasförmige Brennstoff (10) und/oder der feste Brennstoff (10) zumindest ein Mitglied aus der Gruppe bestehend aus den Mitgliedern:
a. Produktgas (30) aus einer CO₂-Entfernungsvorrichtung (35),
b. Tailgas (31) aus einer CO₂-Entfernungsvorrichtung (35),
c. Kühlgas (32),
d. Exportgas (33),
e. Topgas (34),
f. Offgas (12),
g. Koksofengas,
h. Erdgas,
i. durch Druck verflüssigtes Gas,
j. Gas aus Biomassevergasung,
k. kohlenstoff- und/oder wasserstoffhältiges Gas,
l. feste Kohlenstoffträger und/oder feste Kohlenwasser stoffträger
umfasst.

8. Verfahren nach Anspruch 7, **dadurch gekennzeichnet, dass** der gasförmige Brennstoff (10) und/oder der feste Brennstoff (10) nach Austritt aus dem Brenner (2) zumindest teilweise mit einem sauerstoffhältigen Gas (8) oxidiert wird und das sauerstoffhältige Gas (8) zumindest ein Mitglied aus der Gruppe bestehend aus den Mitgliedern:
a. Luft,
b. Sauerstoff,
c. Stickstoff,
d. Dampf
umfasst.

9. Verfahren nach einem der Ansprüche 7 oder 8, **dadurch gekennzeichnet, dass** der feste Brennstoff (10) mittels eines Fördergases (59) in den Brenner (2) transportiert wird, wobei das Fördergas (59) zumindest ein Mitglied aus der Gruppe bestehend aus den Mitgliedern:
a. Produktgas (30) aus einer CO₂-Entfernungsvorrichtung (35),
b. Tailgas (31) aus einer CO₂-Entfernungsvorrichtung (35),
c. Kühlgas (32),
d. Exportgas (33),
e. Topgas (34),
f. Offgas (12),
g. Koksofengas,
h. Erdgas,
i. Gas aus Biomassevergasung,
j. Kohlenstoff- und/oder wasserstoffhältiges Gas,
k. Luft,
l. Sauerstoff,
m. Stickstoff,
n. Dampf
umfasst.

10. Verfahren nach einem der Ansprüche 8 oder 9, **dadurch gekennzeichnet, dass** zumindest eine Teilmenge des gasförmigen Brennstoffes (10) und/oder zumindest eine Teilmenge des sauerstoffhältigen Gases (8) als Fördergas (27) für den pneumatischen Transport des feinteilchenförmigen Materials (4) in den Brenner (2) verwendet wird.

11. Verfahren nach einem der Ansprüche 7 bis 10, **dadurch gekennzeichnet, dass** bei Betrieb des Brenners (2) ausschließlich mit dem sauerstoffhältigen Gas (8) das sauerstoffhältige Gas (8) mit einer Wasserstoff und/oder Kohlenmonoxid und/oder Methan und/oder Kohlenwasserstoffen umfassenden Gasatmosphäre im Reduktionsaggregat (1) umgesetzt wird.

12. Verfahren nach einem der vorangegangenen Ansprüche, **dadurch gekennzeichnet, dass** dem Brenner (2) zumindest ein Feststoff (51), insbesondere Kohlenstoff- und/oder Kohlenwasserstoffträger wie Feinkoks und/oder Feinkohle zugeführt wird, welcher zusätzlich zu dem die eisenhältigen Partikel umfassenden feinteilchenförmigen Material (4) mittels des Brenners (2) in das Reduktionsaggregat (1) eingebracht wird.

13. Verfahren nach einem der vorangegangenen Ansprüche, **dadurch gekennzeichnet, dass** das feinteilchenförmige Material (4) vor Einbringen in die Wirbelschicht (24) und/oder in den Freiraum (25) über der Wirbelschicht (24) in einer Speichervorrichtung (13) gesammelt und gegebenenfalls nachfolgend einer der Speichervorrichtung (13) zugeordneten Druckanpassungsvorrichtung (14) zugeführt wird.

14. Vorrichtung zur Durchführung des Verfahrens nach einem der vorangegangenen Ansprüche mit zumindest einem Reduktionsaggregat (1), wobei zumindest ein Brenner (2) mit einer Materialzufuhrleitung (3) zur Zufuhr von eisenhältige Partikel umfassendem feinteilchenförmigem Material (4) in den Brenner (2) vorhanden ist, **dadurch gekennzeichnet, dass** das Reduktionsaggregat (1) ein Reduktionsaggregat (1) mit Wirbelschicht (24), insbesondere ein Wirbelschichtreduktionsaggregat ist, der Brenner (2) in den Innenraum (5) des Reduktionsaggregates (1) mündet und der Brenner (2) eine Einbringleitung (6) zum Einbringen des feinteilchenförmigen Materials (4) in den Innenraum (5) des Reduktionsaggregates (1) aufweist.

15. Vorrichtung nach Anspruch 14, **dadurch gekennzeichnet, dass** der Brenner (2) eine Gaszufuhrleitung (7) zur Zufuhr von sauerstoffhältigem Gas (8) und/oder eine Brennstoffzufuhrleitung (9) zur Zufuhr von gasförmigen und/oder flüssigen und/oder festen Brennstoffen (10) in den Brenner (2) umfasst.

16. Vorrichtung nach Anspruch 14 oder 15, **dadurch gekennzeichnet, dass** dem zumindest einen Reduktionsaggregat (1) eine Trockenentstaubungsvorrichtung (11) zur Entstaubung von Gas, insbesondere Offgas (12) aus dem zumindest einen Reduktionsaggregat (1), zugeordnet ist.

17. Vorrichtung nach einem der Ansprüche 14 bis 16, **dadurch gekennzeichnet, dass** die Materialzufuhrleitung (3) zur Zufuhr des eisenhältige Partikel umfassenden feinteilchenförmigen Materials (4) von zumindest einer Speichervorrichtung (13) zur Speicherung des feinteilchenförmigen Materials (4) ausgeht.

18. Vorrichtung nach einem der Ansprüche 14 bis 17, **dadurch gekennzeichnet, dass** zumindest eine in den Brenner (2) und/oder in die Gaszufuhrleitung (7) und/oder in die Brennstoffzufuhrleitung (9) mündende Feststoffzufuhrleitung (52) zur Zufuhr von Feststoff (51) in den Brenner (2) und/oder zur Zufuhr des Feststoffes (51) in die Gaszufuhrleitung (7) und/oder zur Zufuhr des Feststoffes (51) in die Brennstoffzufuhrleitung (9) vorhanden ist.

19. Vorrichtung nach einem der Ansprüche 17 oder 18, **dadurch gekennzeichnet, dass** der Speichervorrichtung (13) eine Druckanpassungsvorrichtung (14) zur Einstellung des Druckes der das feinteilchenförmige Material (4) umgebenden Gasatmosphäre (15) zugeordnet ist.

20. Vorrichtung nach einem der Ansprüche 14 bis 19, **dadurch gekennzeichnet, dass** eine pneumatische Fördereinrichtung (16) zur pneumatischen Förderung des feinteilchenförmigen Materials (4) in den Brenner (2) vorhanden ist.

21. Vorrichtung nach Anspruch 14, **dadurch gekennzeichnet, dass** dem Brenner (2) das sauerstoffhältige Gas (8) mittels der Materialzufuhrleitung (3) zuführbar ist.

22. Verwendung des Verfahrens nach einem der Ansprüche 1 bis 13 zur Herstellung von flüssigem Roheisen (17) oder flüssigen Stahlvorprodukten (18) mittels eines Schmelzreduktionsprozesses in einem Schmelzreduktionsaggregat (22), wobei feinteilchenförmiges Material (4) erfindungsgemäß in ein Reduktionsaggregat (1) eingebracht wird und das feinteilchenförmige Material (4), gegebenenfalls unter Zugabe von Zusatzstoffen (19) und feinteilchenförmigen eisenoxidhältigen Einsatzstoffen (41), in dem Reduktionsaggregat (1) mittels eines Reduktionsgases (20) zumindest teilweise zu den Eisenvorprodukten (21) reduziert wird, und die Eisenvorprodukte (21) in einem Schmelzreduktionsaggregat (22), unter Zugabe eines sauerstoffhältigen Gases (8) und kohlenstoffhältiger Energieträger (23), unter Bildung des Reduktionsgases (20) zu flüssigem Roheisen (17) oder flüssigen Stahlvorprodukten (18) aufgeschmolzen werden.

23. Verwendung des Verfahrens nach einem der Ansprüche 1 bis 13 zur Herstellung von Eisenprodukten (60) mittels eines Direktreduktionsprozesses in einer Direktreduktionsanlage, wobei feinteilchenförmiges Material (4) erfindungsgemäß in ein Reduktionsaggregat (1) eingebracht wird und das feinteilchenförmige Material (4), gegebenenfalls unter Zugabe von Zusatzstoffen (19) und feinteilchenförmigen eisenoxidhältigen Einsatzstoffen (41), in dem Reduktionsaggregat (1) mittels eines Reduktionsgases (20) zumindest teilweise zu den Eisenprodukten (60) reduziert wird.
